# EUROPEAN PATENT SPECIFICATION

(11) **EP 3 338 603 B1**
(45) Date of publication and mention of the grant of the patent: **21.08.2019**
(21) Application number: 17204384.6
(22) Date of filing: 29.11.2017
(51) Int. Cl.: A47J 39/00

(54) **FOOD WARMER WITH REFRIGERATOR FUNCTION**
SPEISENWÄRMER MIT KÜHLUNGSFUNKTION
DISPOSITIF DE CHAUFFAGE D'ALIMENTS AVEC FONCTION DE RÉFRIGÉRATION

(30) Priority: 06.12.2016 IT 201600123993
(43) Date of publication of application: 27.06.2018
(73) Proprietor: Marchetti, Romano, 25030 Erbusco (BS) (IT)
(72) Inventor: Marchetti, Romano, 25030 Erbusco (BS) (IT)
(74) Representative: Pes, Matteo

(56) References cited:
- EP-A1- 2 721 978
- DE-U1- 29 817 594
- FR-A1- 2 507 440
- US-A1- 2009 152 258

## Description

### Field of the Invention

The present invention relates in general to a food warmer also with refrigerator function, for carrying food or cold dishes and heating the same for consumption.

### State of the Art

As it is known, food warmers are used in the catering but also in the domestic field in order to heat or keep previously cooked dishes at constant temperature, so that they are ready to be eaten also after a while they have been cooked.

A common food warmer mainly consists of a treatment chamber in which dishes are placed; a heating assembly provided for heating in a controlled manner the air to be fed to the treatment chamber, and an air circulating assembly provided for circulating air between the treatment chamber and the heating assembly, are combined with the treatment chamber.

A food warmer is described, for example, in EP 2721978.

In the catering field and more generally in the HoReCa field, it is often required to deliver dishes to a destination far from the kitchen where the dishes themselves are prepared. It is the typical instance of the catering to school canteens and hospitals. Once delivered to destination, dishes are heated with food warmers indeed available to users.

This system is highly popular worldwide. However, carrying food is logistically critical, for several reasons.

Firstly, dishes have to be delivered well in advance with respect to the time planned for food consumption, in order to enable the users to heat the dishes for an adequate number of people. Dishes have to be removed from the carriers used for their transportation, generally vans, and inserted into the food warmers available at destination, in order to be heated. Trolleys, staff, time are thus required.

Outdoor temperature is another criticality. In countries with very hot summers, when not eaten, dishes have to be kept in the refrigerator, as otherwise could be damaged or encounter bacterial proliferation.

Document US-A-2009/0152258 describes the features included in the preamble of claim 1. In particular this document describes a food warmer comprising a body in which a dish treatment chamber, and associated heating means, are defined. A refrigerating unit is combined with the treatment chamber to remove heat therefrom. The user can selectively activate the heating means or the refrigerating unit, as necessary. The refrigerating unit is separated from the treatment chamber by a wall, but is thermally connected to the treatment chamber by means of the separating wall itself.

Other solutions known in the art are described in FR 2507440 and DE29817594U1.

### Summary of the Invention

Object of the present invention is therefore to provide a food warmer that overcomes the limits of today used systems, thus allowing the simple but effective handing of dishes until the consumption thereof, in all climatic conditions, and simplifying logistics.

Therefore, the present invention relates to a food warmer according to claim 1.

The food warmer comprises a box-shaped body, inside which a dish treatment chamber is defined, and heating means to heat the treatment chamber, for example electric resistors and possibly air circulation fans.

The food warmer further comprises a refrigerating unit combined with the treatment chamber to remove heat therefrom.

The food warmer has thus a dual function: refrigerator for keeping the dishes cold before their consumption, by avoiding their degradation, and real food warmer to heat the dishes or else keep them hot.

Transferring dishes from the refrigerator to the oven, as it usually happens in the canteens, bars, self-services or domestic field, is thus not required anymore. With a single appliance dish storage and heating can be easily managed until the respective consumption.

The treatment chamber is delimited by preferably metallic walls and a door that allows dishes to be inserted and removed. The refrigerating unit is separated from the treatment chamber by a wall; however, the refrigerating unit is thermally connected to the treatment chamber just by means of the separating wall itself, acting as a heat-exchange wall as well. In particular, the refrigerating unit removes heat from the heat-exchange wall that, in turn, removes heat from the air contained in the treatment chamber.

The refrigerating unit is provided with at least one evaporator adjoining to and contacting the heat-exchange wall, on the opposite side with respect to the treatment chamber. According to the invention, a first interspace is delimited by the heat-exchange wall and by a further wall, and the evaporator is housed in the first interspace.

The refrigerating unit comprises a condenser, a compressor, a fan and closed circulation circuit of the refrigerant fluid. When the refrigerating unit is active, the gas coming from the evaporator condenses in the condenser, the refrigerant fluid condensed in the condenser is delivered from the compressor to the evaporator again, and the fan generates an air flow that hits the evaporator to maximize the evaporation and, thus, the heat exchange extent.

Preferably, the refrigerating unit is interchangeable with respect to the food warmer, meaning that it can be easily and removably connected thereto. For example, the refrigerating unit is enclosed in a corresponding box-shaped housing constrainable to the box-shaped body of the food warmer, preferably at one side thereof, with good airtightness, in order to avoid thermal dispersions.

For example, the heat-exchange wall can be part of the refrigerating unit, whereby separating the refrigerating unit from the food warmer, the respective treatment chamber remains open.

Preferably, there is a removable collection tray to collect the condensation that may be generated on the heat-exchange wall. The tray is positioned at the lower edge of the heat-exchange wall, to collect the condensation sliding downwards along the wall itself in the form of drops.

Preferably, the food warmer further comprises a timer control unit programmable to automatically and selectively activate the heating means and the refrigerating unit, for example on an hourly basis with minute increments.

### Brief list of the figures

Further characteristics and advantages of the invention will be more evident by the review of the following specification of a preferred, but not exclusive, embodiment depicted for illustration purposes only and without limitation, with the aid of the accompanying drawings, wherein:
- figure 1 is a schematic perspective view of a food warmer according to the present invention;
- figure 2 is a schematic view, in vertical section, of the food warmer shown in figure 1;
- figure 3 is a schematic perspective and partially transparent view of a component of the food warmer shown in figure 1;
- figure 4 is a schematic perspective view of a component of the food warmer shown in figure 1.

### Detailed description of the invention

The enclosed figures show an example of food warmer 1 according to the present invention, only in schematic form.

The food warmer 1 comprises a box-shaped body 2 inside which there is a treatment chamber 3 to treat dishes, i.e. a chamber wherein food is heated or kept hot.

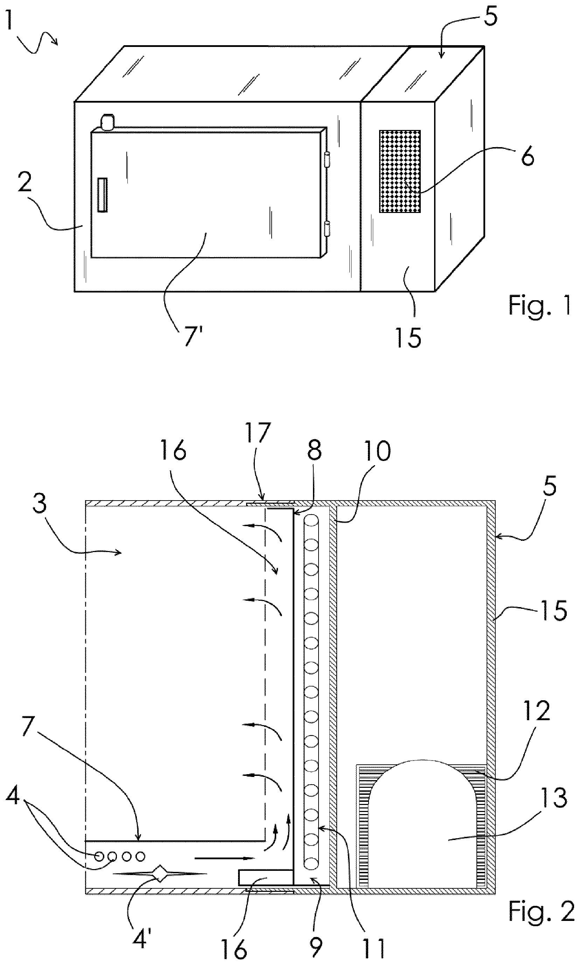

The treatment chamber 3 is delimited by walls 7 and can be accessed through a door 7'. The preferably metal walls 7 make an interspace 16 or a double bottom in which there are the resistors 4 which, when electrically powered, heat the surrounding air. One or more fans 4' circulate hot air in the interspace 16, as denoted by the arrows in figure 2, from where then the hot air reaches the treatment chamber 3 by means of slots.

Unlike normal food warmers, the food warmer 1 further comprises a refrigerating unit 5 enclosed in a box-shaped casing 15 and designed for refrigerating the treatment chamber 3, i.e. to keep the dishes cold in its inside.

In the example shown in the figures, the refrigerating unit 5 is a standalone unit but removably combined with the box-shaped body 2 of the food warmer, as it will be better explained below.

Figure 2 shows a partial section of the food warmer 1 taken on a vertical median plane. The refrigerating unit 5 is laterally inserted into the box-shaped body 2 at the area denoted by the reference 17, where the box-shaped body 2 fits on a corresponding portion of the refrigerating unit 5, with good airtightness in order to avoid air leaks.

Specifically, the treatment chamber 3 is laterally closed by a wall 8 acting both as separation wall with respect to the components of the refrigerating unit 5, but also as heat-exchange wall. The wall 8 is indeed the refrigerated one and removes heat from the air of the treatment chamber 3.

Adjoining the heat-exchange wall 8 and preferably contacting the same there is an evaporator 11, for example of coil type, in which a refrigerant fluid flows that, by removing heat, evaporates.

The evaporator 11 is in an interspace delimited by the heat-exchange wall 8 and by a parallel insulating wall 10, so as to remain separated from the other components of the refrigerating unit 5.

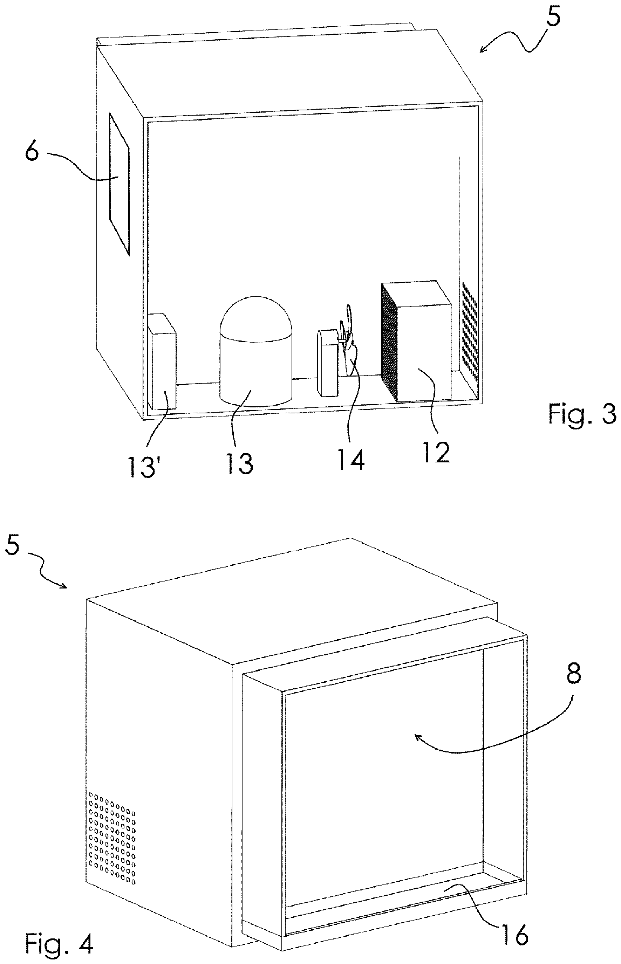

As shown in figure 3, the refrigerating unit 5 comprises indeed a condenser 12 as well, in which the gas coming from the evaporator 11 condenses becoming liquid, a compressor 13 being designed to circulate the refrigerating fluid in the proper circuit (pipes not shown for the sake of simplicity), a fan 14 designed to circulate air, and a power supply 13'.

The refrigerating unit 5 can comprise also an expansion valve (not shown) of the refrigerant fluid, interposed in the respective circuit between the condenser 12 and the evaporator 11.

A control panel 6 allows the user selectively actuating the heating means 4 and the refrigerating unit 5 and, if provided with a timer, allows the automatic start of these components to be adjusted.

The refrigerating unit 5 can be separated from the box-shaped body 2 of the food warmer, to carry out the cleaning or maintenance. Figures 3 and 4 show indeed the refrigerating unit 5 only, separated from the rest of the food warmer. As it can be appreciated, the heat-exchange wall 8 is integral with the refrigerating unit 5; therefore, when the refrigerating unit 5 is separated from the rest of the food warmer 1, the treatment chamber 3 remains laterally open.

Preferably, as shown in the figures, the refrigerating unit 5 further comprises a collection tray 16 to collect the condensation. The tray 16 is positioned at the base of the heat-exchange wall 8 to collect possible drops sliding downwards along the wall 8, by gravity. Preferably the tray 16 is removable for condensation draining, cleaning and sanitizing purposes.

By using the control panel 6, the user can easily heat the dishes previously positioned in the treatment chamber 3, also in case these have been kept cold, without the need of using an external refrigerator.

## Claims

1. Food warmer (1) comprising:
- a box-shaped body (2), inside which a treatment chamber (3) to treat dishes is defined,
- heating means (4) to heat the treatment chamber (3),
- a refrigerating unit (5) combined with the treatment chamber (3) to remove heat therefrom,
wherein the treatment chamber (3) is delimited by walls (7) and a door (7') that allows the insertion and the removal of the dishes, and wherein the refrigerating unit (5) is separated from the treatment chamber (3) by a wall (8), but is thermally connected to the treatment chamber (3) by means of the separating wall (8) itself, the latter acting as a heat-exchange wall as well,
**characterized by** comprising a first interspace (9) delimited by the heat-exchange wall (8) and by a further insulating wall (10), and comprising an evaporator (11) housed in the first interspace (9) and fed with a refrigerant fluid.

2. Food warmer (1) according to claim 1, comprising a control panel (6) by which the user can selectively activate the heating means (4) and the refrigerating unit (5).

3. Food warmer (1) according to claim 1 or claim 2, wherein the refrigerating unit (5) in turn comprises a condenser (12), a compressor (13), a fan (14) and a closed circulation circuit of the refrigerant fluid, wherein when the refrigerating unit (5) is working, the gas coming from the evaporator (11) condenses in the condenser (12), the refrigerant fluid condensed in the condenser (12) is delivered from the compressor (13) to the evaporator (11) again, and the fan (14) generates an airflow.

4. Food warmer (1) according to claim 3, wherein the refrigerating unit (5) further comprises a refrigerant fluid expansion valve operatively interposed between the condenser and the evaporator.

5. Food warmer (1) according to claim 3 or claim 4, wherein the refrigerating unit (5) is enclosed in a corresponding box-shaped housing (15) constrainable to the box-shaped body (2) of the food warmer (1), preferably at one side thereof.

6. Food warmer (1) according to claim 5, wherein the whole refrigerating unit (5) is removably enclosed in the box-shaped housing (15), which can be partially inserted in the box-shaped body (2) of the food warmer (1), as an interchangeable element.

7. Food warmer (1) according to any one of preceding claims 1-6, comprising a removable collection tray (16) to collect the condensation that may originate on the heat-exchange wall (8).

8. Food warmer (1) according to any one of preceding claims 1-7, wherein the heating means (4) comprise electric resistors and may comprise air circulation fans in the treatment chamber (3).

9. Food warmer (1) according to claim 8, comprising a second interspace (16) defined around at least part of the treatment chamber (3), and wherein the electric resistors and possibly the air circulation fans are positioned in such a second interspace (16).

10. Food warmer (1) according to any one of the preceding claims 1-9, comprising a programmable-timer control unit to automatically and selectively activate the heating means (4) and the refrigerating unit (5) depending on time needs.

## Patentansprüche

1. Speisenwärmer (1) umfassend:
- einen kastenförmigen Körper (2), in dem eine Behandlungskammer (3) zur Behandlung von Geschirr definiert ist,
- Heizmittel (4) zur Erwärmung der Behandlungskammer (3),
- eine mit der Behandlungskammer (3) kombinierte Kühleinheit (5) zur Entnahme von Wärme aus diesem,
wobei die Behandlungskammer (3) durch Wände (7) und eine Tür (7') begrenzt ist, die das Einsetzen und Entnehmen des Geschirrs ermöglicht, und wobei die Kühleinheit (5) durch eine Wand (8) von der Behandlungskammer (3) getrennt, aber mit der Behandlungskammer (3) mittels der Trennwand (8) selbst thermisch verbunden ist, wobei letztere ebenfalls als Wärmetauscherwand wirkt, **gekennzeichnet durch** einen ersten Zwischenraum (9), der von der Wärmeaustauschwand (8) und von einer weiteren Isolierwand (10) begrenzt ist, und einen in dem ersten Zwischenraum (9) untergebrachten und mit einem Kältemittelfluid gespeisten Verdampfer (11).

2. Speisenwärmer (1) nach Anspruch 1, mit einem Bedienfeld (6), mit dem der Benutzer wahlweise das Heizmittel (4) und die Kühleinheit (5) ansteuern kann.

3. Speisenwärmer (1) nach Anspruch 1 oder 2, wobei die Kühleinheit (5) wiederum einen Kondensator (12), einen Kompressor (13), einen Ventilator (14) und einen geschlossenen Kreislauf des Kältemittelfluids umfasst, wobei, wenn die Kühleinheit (5) arbeitet, das aus dem Verdampfer (11) kommende gas in dem Kondensator (12) kondensiert, wobei das in dem Kondensator (12) kondensierte Kältemittelfluid von dem Kompressor (13) wieder dem Verdampfer (11) zugeführt wird und der Ventilator (14) einen Luftstrom erzeugt.

4. Speisenwärmer (1) nach Anspruch 3, wobei die Kühleinheit (5) ferner ein Kältemittelfluid-Expansionsventil umfasst, das betriebsmässig zwischen dem Kondensator und dem Verdampfer angeordnet ist.

5. Speisenwärmer (1) nach Anspruch 3 oder 4, wobei die Kühleinheit (5) in einem entsprechenden kastenförmigen Gehäuse (15) eingeschlossen ist, das an dem kastenförmigen Körper (2) des Speisenwärmers (1), vorzugsweise an dessen einer Seite, befestigt ist.

6. Speisenwärmer (1) nach Anspruch 5, wobei die gesamte Kühleinheit (5) lösbar in dem kastenförmigen Gehäuse (15) eingeschlossen ist, das als Auswechselelement teilweise in den kastenförmigen Körper (2) des Speisenwärmers (1) einsetzbar ist.

7. Speisenwärmer (1) nach einem der vorhergehenden Ansprüche 1-6, mit einem abnehmbaren Sammelblech (16) zum Auffangen des Kondensats, das sich auf der Wärmeaustauschwand (8) ausbilden kann.

8. Speisenwärmer (1) nach einem der vorhergehenden Ansprüche 1-7, wobei die Heizmittel (4) elektrische Widerstände und in der Behandlungskammer (3) vorhandene Umluftgebläse umfassen können.

9. Speisenwärmer (1) nach Anspruch 8, umfassend einen zweiten Zwischenraum (16), der zumindest um einen Teil der Behandlungskammer (3) herum definiert ist, und wobei die elektrischen Widerstände und gegebenenfalls die Umluftgebläse in einem solchen zweiten Zwischenraum (16) positioniert sind.

10. Speisenwärmer (1) nach einem der vorhergehenden Ansprüche 1-9, mit einer programmierbaren Timer-Steuereinheit zum automatischen und wahlweisen Ansteuern der Heizeinrichtungen (4) und der Kühleinheit (5) in Abhängigkeit von der benötigten Zeit.

## Revendications

1. Chauffe-plat (1) comprenant:
- un corps en forme de boîte (2) à l'intérieur duquel est définie une chambre de traitement (3) pour traiter les plats,
- moyens chauffants (4) pour chauffer la chambre de traitement (3),
- une unité de réfrigération (5) associée à la chambre de traitement (3) pour éliminer la chaleur de la même,
dans lequel la chambre de traitement (3) est délimitée par des parois (7) et une porte (7') permettant l'insertion et le retrait des plats, et dans lequel l'unité de réfrigération (5) est séparée de la chambre de traitement (3) par une paroi (8), mais elle est thermiquement reliée à la chambre de traitement (3) à l'aide de la paroi de séparation (8) elle-même, cette dernière servant également de paroi d'échange thermique,
**caractérisé en ce qu'**il comprend un premier espace intermédiaire (9) délimité par la paroi d'échange thermique (8) et par une autre paroi isolante (10), et comprenant un évaporateur (11) logé dans le premier espace intermédiaire (9) et alimenté avec un fluide réfrigérant.

2. Chauffe-plat (1) selon la revendication 1, comprenant un panneau de commande (6) permettant à l'utilisateur d'activer de manière sélective les moyens chauffants (4) et l'unité de réfrigération (5).

3. Chauffe-plat (1) selon la revendication 1 ou la revendication 2, dans lequel l'unité de réfrigération (5) comprend à son tour un condenseur (12), un compresseur (13), un ventilateur (14) et un circuit fermé où circule du fluide réfrigérant, dans lequel lorsque l'unité de réfrigération (5) fonctionne, le gaz provenant de l'évaporateur (11) se condense dans le condenseur (12), le fluide réfrigérant condensé dans le condenseur (12) est à nouveau acheminé du compresseur (13) vers l'évaporateur (11), et le ventilateur (14) génère un flux d'air.

4. Chauffe-plat (1) selon la revendication 3, dans lequel l'unité de réfrigération (5) comprend en outre un détendeur de fluide réfrigérant interposé de manière opérationnelle entre le condenseur et l'évaporateur.

5. Chauffe-plat (1) selon la revendication 3 ou la revendication 4, dans lequel l'unité de réfrigération (5) est enfermée dans un logement correspondant en forme de boîte (15) pouvant être contraint au corps en forme de boite (2) du chauffe-plats (1), de préférence sur l'un de ses cotés.

6. Chauffe-plat (1) selon la revendication 5, dans lequel l'ensemble de l'unité de réfrigération (5) est enfermée de manière amovible dans le logement en forme de boîte (15), lequel peut être partiellement inséré dans le corps à forme de boîte (2) du chauffe-plat (1), en tant qu'élément interchangeable.

7. Chauffe-plat (1) selon l'une quelconque des revendications précédentes 1-6, comprenant un bac collecteur amovible (16) pour collecter la condensation pouvant se former sur la paroi d'échange thermique (8).

8. Chauffe-plat (1) selon l'une quelconque des revendications précédentes 1-7, dans lequel les moyens chauffants (4) comprennent des résistances électriques et éventuellement des ventilateurs de circulation d'air dans la chambre de traitement (3).

9. Chauffe-plat (1) selon la revendication 8, comprenant un deuxième espace intermédiaire (16) défini autour d'au moins une partie de la chambre de traitement (3), et dans lequel les résistances électriques et éventuellement les ventilateurs de circulation d'air sont positionnés dans tel second espace intermédiaire (16).

10. Chauffe-plat (1) selon l'une quelconque des revendications précédentes 1-9, comprenant une unité de commande à minuterie programmable pour activer de manière automatique et sélective les moyens chauffants (4) et l'unité de réfrigération (5) en fonction des temps nécessaires.
